# FASCICULE DE BREVET EUROPEEN

(11) **EP 0 872 397 B1**
(45) Date de publication et mention de la délivrance du brevet: **29.10.2003**
(21) Numéro de dépôt: 98400944.9
(22) Date de dépôt: 16.04.1998
(51) Int. Cl.: B61D 17/04, B62D 31/02

(54) **Structure portante, tronçon de structure de caisse et caisse de véhicule comportant de telles structures**
Tragende Struktur, Aufbaustrukturabschnitt und Wagenkastenaufbau mit solchen Strukturen
Supporting structure, body structure section and coach bodywork comprising such structures

(30) Priorité: 17.04.1997 FR 9704742
(43) Date de publication de la demande: 21.10.1998
(73) Titulaire: GEC ALSTHOM TRANSPORT SA, 75016 Paris (FR)
(72) Inventeur: Devallez, Alain, 59278 Escautpont (FR); Simon, Vincent, 59310 Beuvry la Forêt (FR)
(74) Mandataire: de Lambilly Delorme, Marie Pierre

(56) Documents cités:
- EP-A- 0 118 116
- DE-C- 726 433
- FR-A- 660 298
- GB-A- 314 685

## Description

La présente invention concerne les structures de caisses de véhicules ferroviaires ou routiers, en général, et porte, plus particulièrement, sur une structure portante, sur un tronçon de structure de caisse et sur une caisse de véhicule comportant de telles structures.

Il est connu de l'état de la technique des caisses de véhicules ferroviaires ou routiers.

Le document GB 314 685 décrit une ossature de véhicule comportant des éléments de structure portante (a, h, f, p, q) pour caisse de véhicule radiaux à l'axe longitudinal de la caisse, susceptibles d'être associés à des éléments structurels (d) parallèles audit axe longitudinal de ladite caisse, dans laquelle lesdits éléments de structure portante sont constitués d'au moins une baguette plate (a, h, f, p, q).

Un inconvénient de cette ossature de l'art antérieur est que la structure portante ne permet pas de réaliser des faces non planes de façon simple.

Le document CH 285 666 décrit un assemblage traditionnel de profilés creux, la structure de pas de trumeau étant également rigidifiée par des profilés creux.

Le mode de réalisation défini est très peu usité industriellement.

Les documents EP 0 605 366 de FIAT FERROVIARIA S.p.A. et EP 0 672 567 de HITACHI LTD portent sur une caisse de véhicule ferroviaire obtenue par assemblage de profilés creux.

Un inconvénient de cette technologie est qu'elle nécessite que les profilés creux aient la longueur du véhicule.

Un autre inconvénient de cette technologie est d'être coûteuse.

Le document US 4 353 313 de Centro Ricerche Fiat S.p.A. décrit une structure de caisse constituée par l'assemblage de deux demi-pavillons et d'une partie inférieure ayant la longueur de la caisse.

La structure comprise entre deux trumeaux utilise des baguettes planes cintrées sur les bords pour la rigidification.

Un inconvénient de cette technologie est que sa mise en oeuvre est complexe.

Aussi un but de l'invention est-il une caisse de véhicule dont la structure portante est allégée et simplifiée.

Un autre but de l'invention est une caisse de véhicule dont la structure portante permet de réaliser des faces non planes.

En d'autres termes, un but de l'invention est une structure portante et un tronçon de structure de caisse permettant une souplesse du mode de réalisation et donc une modulation possible des formes et des dimensions.

Conformément à l'invention, la structure portante, le tronçon de structure de caisse et la caisse de véhicule comportant de telles structures sont tels que caractérisés dans la revendication 1.

Un avantage de la structure portante, du tronçon de structure de caisse et de la caisse de véhicule comportant de telles structures de l'invention est de ne pas faire appel à des profilés creux qui s'oxydent et qui créent des ponts thermiques.

Un autre avantage de la structure portante, du tronçon de structure de caisse et de la caisse de véhicule comportant de telles structures de l'invention est de ne pas faire appel à des profilés extrudés de face qui sont coûteux à fabriquer et qui sont lourds.

Un autre avantage de la structure portante, du tronçon de structure de caisse et de la caisse de véhicule comportant de telles structures de l'invention est de diminuer les temps de réalisation.

Un autre avantage de la structure portante, du tronçon de structure de caisse et de la caisse de véhicule comportant de telles structures de l'invention est de diminuer les coûts.

Un autre avantage de la structure portante, du tronçon de structure de caisse et de la caisse de véhicule comportant de telles structures de l'invention est une diminution de la maintenance du fait d'une corrosion moindre.

D'autres buts, caractéristiques et avantages de l'invention apparaîtront à la lecture de la description du mode de réalisation préféré de la structure portante, du tronçon de structure de caisse et de la caisse- de véhicule comportant de telles structures, description faite en liaison avec les dessins dans lesquels:
- la figure 1 est une vue partielle intérieure d'une demi-caisse de véhicule conforme à l'invention,
- la figure 2 est une vue éclatée d'un tronçon de structure de caisse utilisé dans la caisse de véhicule selon la figure 1,
- la figure 3 est une vue en coupe latérale d'une caisse de véhicule conforme à l'invention.

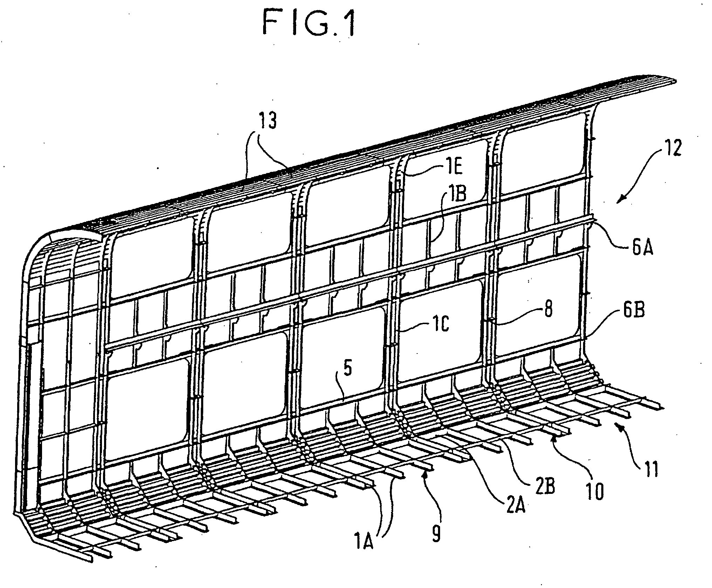

La figure 1 est une vue partielle intérieure d'une demi-caisse de véhicule conforme à l'invention.

La caisse de véhicule 12 conforme à l'invention comporte au moins un tronçon 11 de structure de caisse sur lequel sont rapportés au moins deux profilés longitudinaux 5 porteurs parallèles audit axe longitudinal de la caisse.

Ces deux profilés longitudinaux porteurs contribuent à la raideur longitudinale en flexion et assurent l'alignement des structures.

Des tôles de recouvrement 13 sont rapportées sur les tronçons 11 de structure de caisse.

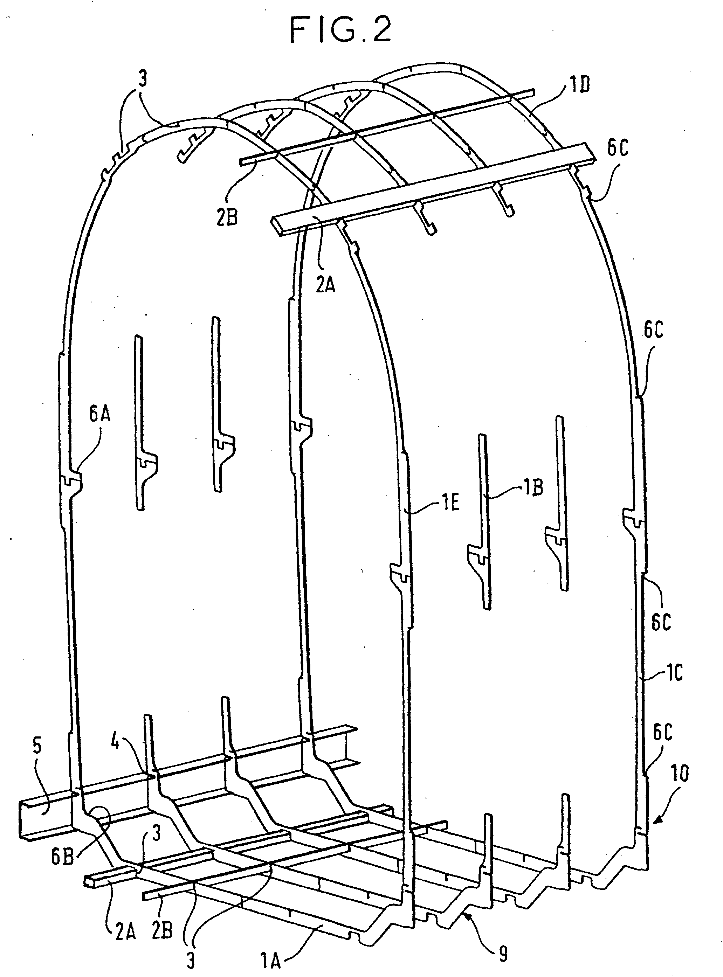

La figure 2 est une vue éclatée d'un tronçon de structure de caisse utilisé dans la caisse de véhicule selon la figure 1.

Chaque tronçon 11 de structure de caisse de véhicule comporte au moins une structure portante 9 en forme de portion d'anneau et au moins deux structures portantes 10 en forme d'anneau.

Ces structures portantes 9, 10 sont associées aux éléments structurels 2A, 2B parallèles à l'axe longitudinal de la caisse.

Les structures portantes 9, 10 pour caisse de véhicule comportent chacune au moins un élément de structure portante 1A à 1E et forment au moins une portion d'anneau.

Les structures portantes 9 formant une portion d'anneau, comportent un ensemble d'éléments de structure portante 1A disposés dans un seul plan.

Les structures portantes 10 formant un anneau, comportent au moins un premier et un deuxième ensembles d'éléments de structure portante 1A à 1E formant chacun un anneau, ces anneaux étant disposés, par exemple, côte à côte parallèlement entre eux.

Les éléments de structure portante 1A à 1E sont, de préférence, constitués de baguettes plates découpées en fonction de la forme souhaitée des faces extérieures de la caisse du véhicule.

Les structures portantes 10 comportent des plats de liaison 8 (figure 1) disposés perpendiculairement entre les profilés 1A à 1E composant les anneaux.

Les éléments de structure portante 1A à 1E pour caisse de véhicule sont disposés radialement à l'axe longitudinal de la caisse et sont susceptibles d'être associés à des éléments structurels 2A, 2B parallèles à l'axe longitudinal de la caisse.

Chacun de ces éléments de structure portante 1A à 1E est constitué d'au moins une baguette plate.

Par baguette plate, il faut comprendre ici tout élément obtenu par tout procédé, par exemple, de laminage, d'extrusion ou de découpage laser.

Les baguettes plates 1A à 1E sont comprises dans un plan radial à l'axe longitudinal de la caisse.

Certain des éléments de structure portante 1A à 1E comporte au moins une encoche de réception 3 d'au moins un des éléments structurels 2A, 2B.

Certain des éléments de structure portante 1A à 1E comporte au moins une encoche de réception 4 d'un profilé longitudinal 5.

Certain des éléments de structure portante 1A à 1E comporte au moins un décrochement 6A à 6D susceptible de recevoir un élément de garnissage 7A à 7D.

Ces éléments de garnissage 7A à 7D sont, par exemple, un plancher intermédiaire 7A, une estrade 7B, une fenêtre 7C, un câblage 7D ou un siège.

Les éléments de structure portante 1A à 1E sont susceptibles de s'emboîter par au moins l'une de leurs extrémités à un autre élément de structure portante.

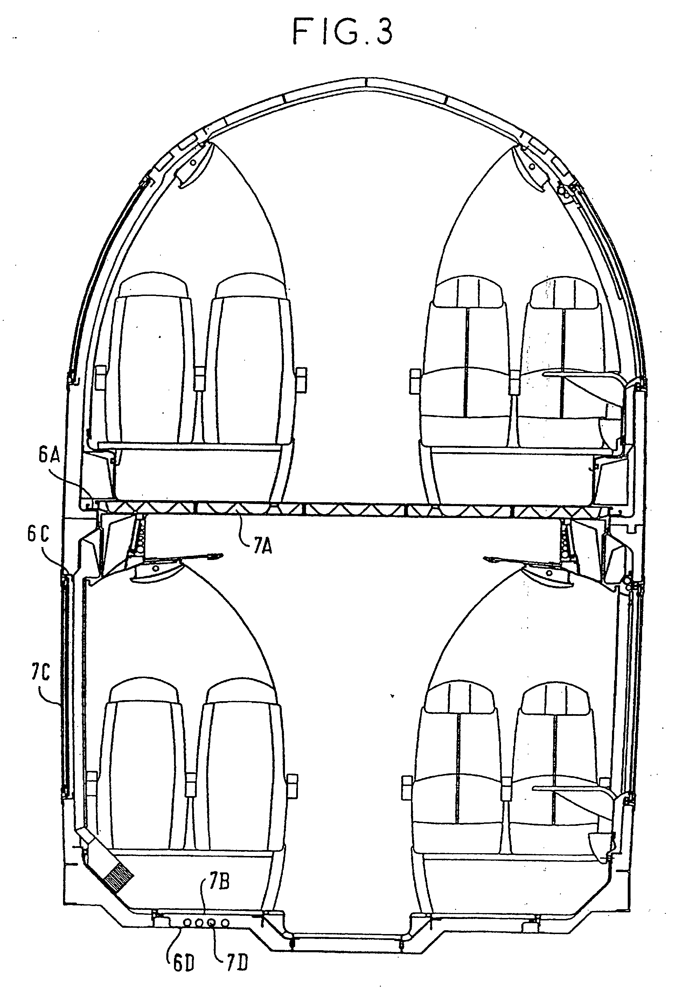

La figure 3 est une vue en coupe latérale d'une caisse de véhicule conforme à l'invention montrant plus particulièrement certains décrochements 6A et 6D et leurs éléments de garnissage 7A à 7D correspondants.

Comme il ressort de la description ci-dessus, la tructure portante 10 pour caisse de véhicule est radiale à l'axe longitudinal de la caisse et est susceptible d'être associée à des éléments structurels 2A, 2B, 5 parallèles à l'axe longitudinal de la caisse et comporte au moins une baguette plate 1A à 1E.

La structure portante constitue une membrure plate, dans laquelle les éléments structurels 2A, 2B, 5 sont susceptibles de s'insérer dans laladite membrure au moyen d'encoches de réception 3, 4.

Il est clair que les membrures constituent soit un anneau complet, soit un anneau incomplet.

## Revendications

1. Structure portante (10) en forme d'anneau pour caisse de véhicule, ladite structure étant radiale à l'axe longitudinal de ladite caisse et étant susceptible d'être associée à des éléments structurels (2A, 2B, 5) parallèles audit axe longitudinal de ladite caisse, ladite structure portante constituant une membrure plate et comportant au moins une baguette plate (1A à 1E), ladite structure étant **caractérisée en ce que** certaine(s) des baguettes plates (1A à 1E) comportent au moins une encoche de réception (3, 4) desdits éléments structurels (2A, 2B, 5) parallèles à l'axe longitudinal de la caisse.

2. Structure selon la revendication 1, laquelle comporte au moins une encoche de réception (3) d'au moins un desdits éléments structurels (2A, 2B).

3. Structure selon l'une quelconque des revendications 1 ou 2, laquelle comporte au moins une encoche de réception (4) d'un profilé longitudinal (5).

4. Structure selon l'une quelconque des revendications 1 à 3, dans laquelle lesdites baguettes plates (1A à 1E) sont comprises dans un plan radial audit axe longitudinal de ladite caisse.

5. Structure selon l'une quelconque des revendications 1 à 4, laquelle comporte au moins un décrochement (6A à 6D) susceptible de recevoir un élément de garnissage (7A à 7D).

6. Structure selon la revendication 5, dans laquelle lesdits éléments de garnissage (7A à 7D) sont un plancher intermédiaire (7A), une estrade (7B), une fenêtre 7C), un câblage (7D) ou un siège.

7. Structure selon l'une quelconque des revendications 1 à 6, laquelle est susceptible de s'emboîter par au moins l'une de ses extrémités à un autre élément de structure portante selon l'une quelconque des revendications précédentes.

8. Structure selon l'une quelconque des revendications 1 à 6, dans laquelle au moins une desdites membrures est un anneau complet.

9. Structure selon l'une quelconque des revendications 1 à 6, dans laquelle au moins une desdites membrures est un anneau incomplet.

10. Structure portante (10) selon l'une quelconque des revendications 1 à 9, laquelle comporte un premier et un second ensembles de baguettes plates (1A à 1E) formant chacun un anneau, lesdits anneaux étant disposés côte à côte et parallèles entre eux.

11. Structure portante (10) selon la revendication 10, laquelle comporte des plats de liaison (8) disposés perpendiculairement entre lesdites baguettes plates (1A à 1E) composant lesdits anneaux.

12. Tronçon (11) de structure de caisse de véhicule, **caractérisé en ce qu'**il comporte au moins une structure portante (9) formant une portion d'anneau comportant un ensemble de baguettes plates (1A à 1E) disposées dans un seul plan et au moins une structure portante (10) en forme d'anneau selon l'une quelconque des revendications 1 à 11, lesdites structures portantes (9, 10) étant associées auxdits éléments structurels (2A, 2E) parallèles audit axe longitudinal de ladite caisse.

13. Caisse de véhicule (12), **caractérisée en ce qu'**elle comporte au moins un tronçon (11) de structure de caisse selon la revendication 12, sur lequel sont rapportés au moins deux profilés longitudinaux (5) porteurs parallèles audit axe longitudinal de ladite caisse.

14. Caisse selon la revendication 13, sur laquelle sont rapportées des tôles de recouvrement (13).

## Claims

1. A load-carrying structure (10) in the form of a ring for a vehicle body, said structure extending radially to the longitudinal axis of said body and being suitable for being associated with structural elements (2A, 2B, 5) parallel to said longitudinal axis of said body, said load-carrying structure constituting a flat frame member and including at least one flat strip (1A to 1E), said structure being **characterized in that** one or more of the flat strips (1A to 1E) include(s) at least one notch (3, 4) for receiving said structural elements (2A, 2B, 5) parallel to the longitudinal axis of the body.

2. A structure according to claim 1, which structure includes at least one notch (3) for receiving at least one of said structural elements (2A, 2B).

3. A structure according to claim 1 or 2, including at least one notch (4) for receiving a longitudinal section member (5).

4. A structure according to any one of claims 1 to 3, in which said flat strips (1A, to 1E) lie in a plane that is radial to said longitudinal axis of said body.

5. A structure according to any one of claims 1 to 4, including at least one step (6A to 6D) suitable for receiving an element of trim (7A to 7D).

6. A structure according to claim 5, in which said elements of trim (7A to 7D) are an intermediate floor (7A), a platform (7B), a window (7C), cabling (7D), or a seat.

7. A structure according to any one of claims 1 to 6, suitable for engaging via at least one of its ends with another load-carrying structural element according to any preceding claim.

8. A structure according to any one of claims 1 to 6, in which at least one of said frame members is a complete ring.

9. A structure according to any one of claims 1 to 6, in which at least one of said frame members is an incomplete ring.

10. A load-carrying structure (10) according to any one of claims 1 to 9, including first and second sets of flat strips (1A to 1E) each forming a ring, said rings being disposed in parallel one behind the other.

11. A load-carrying structure (10) according to claim 10, including linking flats (8) disposed perpendicularly between said flat strips (1A to 1E) constituting said rings.

12. A segment (11) of vehicle body structure, **characterized in that** it includes at least one load-carrying structure (9) forming a portion of a ring including a set of flat strips (1A to 1E) lying in a single plane and at least one load-carrying structure (10) in the form of a ring according to any one of claims 1 to 11, said load-carrying structures (9, 10) being associated with said structural elements (2A, 2B) parallel to said longitudinal axis of said body.

13. A vehicle body (12) **characterized in that** it includes at least one body structure segment (11) according to claim 12, on which at least two load-carrying longitudinal section members (5) are fitted parallel to said longitudinal axis of said body.

14. A body according to claim 13, on which covering metal sheet (13) is fitted.

## Patentansprüche

1. Ringförmige, tragende Struktur (10) für Wagenkastenaufbau, wobei die genannte Struktur radial zur Längsachse des genannten Wagenkastenaufbaus verläuft und mit Strukturelementen (2A, 2B, 5) verbunden werden kann, die parallel zu der genannten Längsachse des genannten Wagenkastenaufbaus verlaufen, wobei die genannte tragende Struktur aus einem Flachgurt besteht und mindestens einen Flachstab (1A bis 1E) besitzt, wobei die genannte Struktur **dadurch gekennzeichnet ist, dass** bestimmte der Flachstäbe (1A bis 1E) mindestens eine Aufnahmekerbe (3, 4) für die genannten Strukturelemente (2A, 2B, 5), die parallel zur Längsachse des Wagenkastenaufbaus verlaufen, besitzen.

2. Struktur nach Anspruch 1, die mindestens eine Aufnahmekerbe (3) für mindestens eines der genannten Strukturelemente (2A, 2B) besitzt.

3. Struktur nach einem der vorhergehenden Ansprüche, die mindestens eine Aufnahmekerbe (4) für ein Längsprofil (5) besitzt.

4. Struktur nach einem der vorhergehenden Ansprüche, wobei die genannten flachen Stäbe (1A bis 1E) in einer Radialebene zur genannten Längsachse des genannten Wagenkastenaufbaus angeordnet sind.

5. Struktur nach einem der vorhergehenden Ansprüche, die mindestens einen Absatz (6A bis 6D) besitzt, der ein Auskleidungselement (7A bis 7D) aufnehmen kann.

6. Struktur nach Anspruch 5, wobei es sich bei den Auskleidungselementen (7A bis 7D) um einen Zwischenboden (7A), ein Podest (7B), ein Fenster (7C), eine Verdrahtung (7d) oder einen Sitz handelt.

7. Struktur nach einem der vorhergehenden Ansprüche, die nach einem der vorhergehenden Ansprüche mit mindestens einem ihrer Enden mit einem anderen Element der tragenden Struktur verschachtelt werden kann.

8. Struktur nach einem der vorhergehenden Ansprüche 1 bis 6, bei der mindestens einer der genannten Gurte ein vollständiger Ring ist.

9. Struktur nach einem der vorhergehenden Ansprüche 1 bis 6, bei der mindestens einer der genannten Gurte ein unvollständiger Ring ist.

10. Tragende Struktur (10) nach einem der vorhergehenden Ansprüche, die eine erste und eine zweite Einheit Flachstäbe (1A bis 1E) besitzt, die jeweils einen Ring bilden, wobei die genannten Ringe Bogenrippe an Bogenrippe und parallel zueinander angeordnet sind.

11. Tragende Struktur (10) nach Anspruch 10, die Verbindungs-Flachprofile (8) besitzt, die senkrecht zwischen den genannten Flachstäben (1A bis 1E), die die genannten Ringe bilden, angeordnet sind.

12. Aufbaustrukturabschnitt (11), **dadurch gekennzeichnet, dass** er mindestens eine tragende Struktur (9) besitzt, die einen ringförmigen Abschnitt bildet, der eine Einheit von Flachstäben (1A bis 1E) besitzt, die in einer einzigen Ebene angeordnet sind, und mindestens eine ringförmige, tragende Struktur (10) nach einem der vorhergehenden Ansprüche besitzt, wobei die genannten tragenden Strukturen (9, 10) mit den genannten Strukturelementen (2A, 2E) parallel zur genannten Längsachse des genannten Wagenkastenaufbaus verbunden sind.

13. Wagenkastenaufbau (12), **dadurch gekennzeichnet, dass** er mindestens einen Aufbaustrukturabschnitt (11) nach Anspruch 12 besitzt, auf den mindestens zwei längsverlaufende Tragprofile (5) parallel zu der genannten Längsachse des genannten Wagenkastenaufbaus aufgesteckt sind.

14. Wagenkastenaufbau nach Anspruch 13, auf den Abdeckbleche (13) aufgesteckt sind.
